# EUROPEAN PATENT APPLICATION

(11) **EP 2 487 457 A1**
(43) Date of publication of application: **15.08.2012**
(21) Application number: 10821946.0
(22) Date of filing: 27.09.2010
(51) Int. Cl.: G01C 15/00, G01C 11/06, G01C 21/00, G06T 1/00

(54) **THREE-DIMENSIONAL DATA CREATING METHOD AND THREE-DIMENSIONAL DATA CREATING DEVICE**

(30) Priority: 06.10.2009 JP 2009232798
(71) Applicant: Kabushiki Kaisha TOPCON, Tokyo 174-8580 (JP)
(72) Inventor: OHTOMO Fumio, Tokyo 174-8580 (JP); KUMAGAI Kaoru, Tokyo 174-8580 (JP); OTANI Hitoshi, Tokyo 174-8580 (JP)
(74) Representative: Camp, Ronald
(86) International application number: PCT/JP2010/067301
(87) International publication number: WO 2011/043275

(57) **Abstract**

The invention provides a three-dimensional data preparing method, using image pickup units 8a and 8b to take an image of scenery in the surroundings and to acquire digital image data, comprising a step of continuously taking images of scenery in the surroundings by the image pickup unit while moving, a step of acquiring the images taken at predetermined time interval as images for measurement, a step of extracting a landmark from the image for measurement through pattern recognition by using the landmark as a template, a step of carrying out a matching of two adjacent images for measurement as time passes, and a step of obtaining three-dimensional coordinates of a point to take the image for measurement based on three-dimensional coordinates of a landmark of the image for measurement where three-dimensional coordinates of the landmark included at least in the first one image for measurement is already known.

## Description

### TECHNICAL FIELD

The present invention relates to a three-dimensional data preparing method and a three-dimensional data preparing device, by which it is possible to measure a position of a mobile object, and to prepare an image data with three-dimensional data based on continuous images acquired during moving even when the mobile object is not provided with a position detecting device.

### BACKGROUND ART

A global positioning system (GPS device) is now propagated as a measuring system to measure absolute coordinates on the ground. The GPS device measures three-dimensional coordinates on the ground by using electric waves from at least three or more artificial satellites, or preferably, from 5 or more artificial satellites. However, position measurement by the GPS device cannot be carried out in a space where the electric wave does not reach, or in an area not covered by the electric wave from the artificial satellite, or in a space where the electric wave is interrupted by obstacles such as a building, or in a closed space such as a tunnel.

In JP-A-2007-147341 (the Patent Document 1), the present applicant has proposed a method for measuring a position of a mobile object and a measuring device for carrying out such measurement. In this method and this measuring device, an image pickup unit is mounted on the mobile object, images are acquired continuously during movement by means of the image pickup unit, feature points are extracted from the images by image processing, position measurement of the feature points extracted by the method of resection is performed based on the position of the mobile object, which is already known. Further, the position of the mobile object after moving is measured by the method of intersection based on the feature points, of which the position is already known. According to this method and this measuring device, it is possible to measure the position of the mobile object at real time even when there is no position measuring device such as the GPS.

According to the method to measure the position of the mobile object as disclosed in JP-A-2007-147341 (the Patent Document 1), the feature points are extracted from the object such as a building in the image as described above. The extraction of the feature point is performed for instance, by means of image processing by extracting a point where contrast such as an angle of a building shows extensive changes. However, many uncertain elements may be involved for instance, when the mobile object moves, the position of the mobile object in the image is changed and also, when an image pickup direction is changed, an interruption by the other building may occur, or contrast may be altered due to a change of weather.

Further, a factor of error is included during the process of extraction of the feature point. Therefore, there has a problem that errors are cumulated in the position measurement of the mobile object by the method of resection and by the method of intersection.

In this respect, it is necessary to extract a multiple of feature points to have higher accuracy. Also, it is necessary to extract the feature points and further, to match feature points between images in the image processing. Therefore, there were problems that data processing amount is increased, causing more burden on the data processing device and that longer time is required for processing and other problems.

To solve the problems as described above, the present invention provides a three-dimensional data preparing method and a three-dimensional data preparing device, by which it is possible to measure the position of the mobile object based on continuous images acquired during movement in simpler manner, and to prepare image data with three-dimensional data.

### PRIOR ART REFERENCES

[Patent Document 1] JP-A-2007-147341
[Patent Document 2] JP-A-8-255245

### DISCLOSURE OF THE INVENTION

The present invention provides a three-dimensional data preparing method, using an image pickup unit to take an image of scenery in the surroundings and to acquire digital image data, comprising a step of continuously taking images of scenery in the surroundings by the image pickup unit while moving, a step of acquiring the images taken at predetermined time interval as images for measurement, a step of extracting a landmark from the image for measurement through pattern recognition by using the landmark as a template, a step of carrying out a matching of two adjacent images for measurement as time passes, and a step of obtaining three-dimensional coordinates of a point to take the image for measurement based on three-dimensional coordinates of a landmark of the image for measurement where three-dimensional coordinates of the landmark included at least in the first one image for measurement is already known.

Also, the present invention provides the three-dimensional data preparing method as described above, wherein matching of the two images is carried out by using landmarks.

Further, the present invention provides the three-dimensional data preparing method as described above, further comprising a step of extracting a feature point, wherein matching of the two images is carried out by using the landmarks and the feature point. Also, the present invention provides the three-dimensional data preparing method as described above, including a step of obtaining three-dimensional coordinates of a landmark in the measurement image taken from two points to take images for measurement by the method of intersection. Further, the present invention provides the three-dimensional data preparing method as described above, comprising a step of measuring three-dimensional coordinates of the landmark included in the image for measurement by means of a surveying instrument. Also, the present invention provides the three-dimensional data preparing method as described above, further comprising a step of measuring three-dimensional coordinates by a surveying instrument in advance with respect to a landmark needed for measurement by the method of resection among the landmarks included in the image taken in a predetermined moving range. Further, the present invention provides the three-dimensional data preparing method as described above, wherein three-dimensional coordinates are measured by the above three-dimensional data preparing method with respect to a landmark needed for the measurement by the method of resection among the landmarks included in the image taken in a predetermined moving range.

Also, the present invention provides a three-dimensional data preparing method, using a position detecting sensor at least having an image pickup unit to take an image of scenery in the surroundings and to acquire digital image data, comprising a step of continuously taking the images of scenery in the surroundings by the image pickup unit while moving, a step of acquiring the images taken at a predetermined time interval as images for measurement, a step of extracting a landmark from the image for measurement through pattern recognition by using the landmark as a template, a step of carrying out a matching of two adjacent images of measurement as time passes, a step of obtaining three-dimensional coordinates of the landmark based on the three-dimensional coordinates of the two points, which three-dimensional coordinates of two points where at least the first two images for measurement are taken are already known, and a step of obtaining three-dimensional coordinates of the next point to take images for the next measurement based on the three-dimensional coordinates of the obtained landmark.

Further, the present invention provides the three-dimensional data preparing method as described above, wherein matching of the two images is carried out by using landmarks.

Also, the present invention provides the three-dimensional data preparing method as described above, wherein the matching of the two images is carried out by using the landmarks and feature points in the images. Further, the present invention provides the three-dimensional data preparing method as described above, wherein the position detecting sensor has a GPS position detecting device, and three-dimensional coordinates of the two points are made known by the GPS position detecting device. Also, the present invention provides the three-dimensional data preparing method as described above, further comprising a step of measuring three-dimensional coordinates of the two points by a surveying instrument, wherein three-dimensional coordinates of the two points are acquired by the surveying instrument.

Further, the present invention provides a three-dimensional data preparing device, comprising an image pickup unit for taking images of scenery in the surroundings and for acquiring a digital image, a recognizing unit, having a landmark image as a template, for using the digital images acquired at a predetermined time interval as the images for measurement, and for recognizing the landmark from the image for measurement through pattern recognition of the image for measurement with the template, and a data processing preparation unit, having in advance three-dimensional coordinates of the landmark included in the image for measurement thus taken, for measuring the three-dimensional coordinates of an image pickup point by the method of resection based on the three-dimensional coordinates of the recognized landmark. Also, the present invention provides the three-dimensional data preparing device as described above, wherein the data processing preparation device measures three-dimensional coordinates of a first image pickup point and a second image pickup point by the method of resection and measures three-dimensional coordinates of an unknown landmark, with respect to unknown landmark in the image for measurement taken at the second point, by the method of intersection based on the matching of images from the first image pickup point and the second image pickup point. Further, the present invention provides the three-dimensional data preparing device as described above, wherein the data processing preparation device has in advance at least three-dimensional coordinates of the landmark to be needed for the method of resection, among the landmarks present in a predetermined moving range, and measures three-dimensional coordinates of the image pickup point in the moving range by the method of resection. Also, the present invention provides the three-dimensional data preparing device as described above, wherein three-dimensional coordinates of the landmark are determined by the above three-dimensional data preparing method. Further, the present invention provides the three-dimensional data preparing device as described above, wherein three-dimensional coordinates of the landmark are measured in advance by the surveying instrument.

Also, the present invention provides a three-dimensional data preparing device, comprising a position detecting sensor at least provided with an image pickup unit for taking an image of scenery in the surroundings and for acquiring a digital image, a recognizing unit, having landmark image as a template, for having the digital images acquired at a predetermined time interval as images for measurement and for recognizing landmark from the image for measurement through pattern recognition of the image for measurement with the landmark, and a data processing preparation unit for performing stereoscopic measurement by matching of landmarks in two adjacent images for measurement as time passes, for obtaining three-dimensional coordinates of the landmark by the method of intersection based on the three-dimensional coordinates of a first and a second points wherein the first and the second points are points taking at least first two images for measurement and three-dimensional coordinates of the first and the second points are already known, for measuring three-dimensional coordinates of a third point by the method of resection based on the three-dimensional coordinates of the obtained landmark and on the a result of stereoscopic measurement of the third point, which is an unknown point, and for associating three-dimensional coordinates of each of image pickup points with the images for measurement as obtained at each of the image pickup points.

Further, the present invention provides the three-dimensional data preparing device as described above, further comprising a GPS position detecting device, wherein three-dimensional coordinates of a first and a second points are acquired by the GPS position detecting device. Also, the present invention provides the three-dimensional data preparing device as described above, wherein three-dimensional coordinates of the first and the second points are acquired in advance by a predetermined means.

### BRIEF DESCRIPTION OF THE DRAWINGS

Fig. 1 is a schematical drawing to show a three-dimensional data preparing device according to an embodiment of the present invention;
Fig. 2 is a schematical drawing to explain the case where the three-dimensional data preparing device according to the present invention is applied to an automobile;
Fig. 3 is a schematical block diagram of a position measuring instrument according to the embodiment of the present invention;
Fig. 4 is a schematical drawing to show a relation between a route to be measured and landmark in the embodiment of the present invention;
Fig. 5 is a drawing to show conditions of measurement in the embodiment of the present invention;
Fig. 6 (A) is a schematical drawing to explain position measurement on a tracking point by a method of intersection on the acquired image, and Fig. 6 (B) is a schematical drawing to explain the position measurement of an image pickup point by a method of resection based on the acquired images;
Fig. 7 is a flowchart to show operation of a first embodiment of the present invention;
Fig. 8 is a flowchart to show an operation of the first embodiment of the present invention;
Fig. 9 is a drawing to show condition of measurement in a second embodiment of the present invention;
Fig. 10 is a flowchart to show operation of the second embodiment of the present invention; and
Fig. 11 is a flowchart to show operation of the second embodiment of the present invention.

### LEGEND OF REFERENCE NUMERALS

- 1: Three-dimensional data preparing device
- 2: Data processing preparation unit
- 3: Position detecting sensor
- 4: Operation unit
- 5: Display unit
- 6: Sensor main unit
- 7: GPS position detecting device
- 8: Image pickup unit
- 14: Control arithmetic unit
- 15: Memorizing unit
- 16: Program storage region
- 17: Data storage region
- 18: Landmark recognizing unit
- 19: Calculation member
- 20: Memorizing member
- 21: Template image storage region
- 22: Program storage region
- 23: Communication control unit

### BEST MODE FOR CARRYING OUT THE INVENTION

Detailed description will be given below on embodiments of the present invention by referring to the attached drawings.

First, description will be given on general outline of the principle of the present invention.

In the present invention, a position detecting sensor having an image pickup unit is mounted on a mobile object. Continuous images are acquired during the moving of the mobile object by the image pickup unit. Feature points are extracted from the image thus acquired, and based on the feature points, three-dimensional position of the mobile object is determined by image surveying.

According to the present invention, marks on the ground as installed on road side or on the road, such as road sign, signal unit, telephone pole, manhole cover, etc. (hereinafter referred as "landmarks") are acquired as feature points. Further, three-dimensional position data (three-dimensional coordinates) of each landmark are acquired, and three-dimensional position of the mobile object is determined at real time based on the landmarks recognized in the image and three-dimensional coordinates of the acquired landmark.

As the methods to acquire the three-dimensional coordinates of the landmark, there are two methods: a method to sequentially obtain the data from continuous images acquired during moving by alternately repeating the method of intersection and the method of resection, and a method to acquire the data by determining three-dimensional coordinates of the landmarks in advance.

In a stereoscopic measurement to determine three-dimensional position by the method already known by using images taken at two points, the method of intersection is a method to measure three-dimensional coordinates by using images obtained from two or more points where three-dimensional coordinates are already known and to calculate coordinates of an unknown point. The method of resection is a method where stereoscopic measurement is performed by using image of a known point, which has been taken from an unknown point and to calculate coordinates of a position where the image is taken.

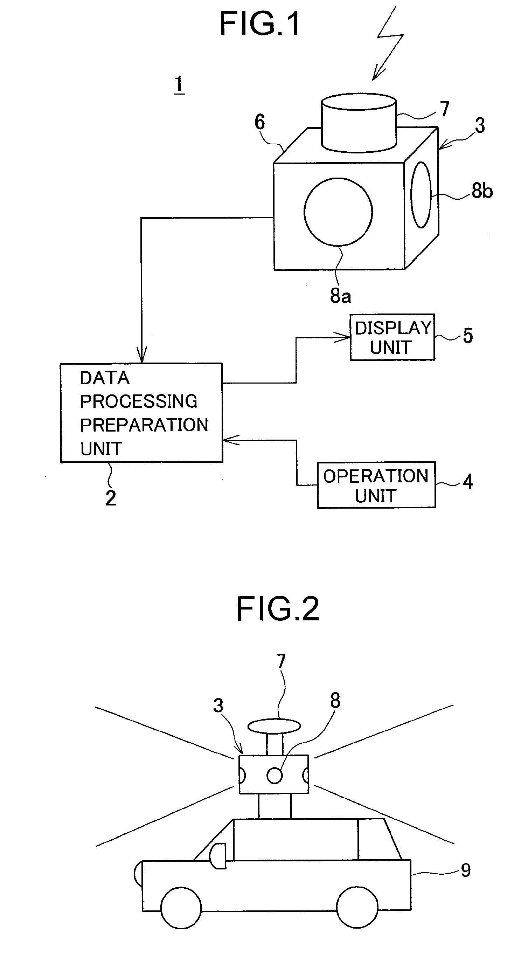

Fig. 1 is a schematical drawing to show general outline of a three-dimensional data preparing device 1 according to an embodiment of the present invention. The three-dimensional data preparing device 1 primarily comprises a data processing preparation unit 2, a position detecting sensor 3, an operation unit 4, and a display unit 5. The position detecting sensor 3 is installed at a position with good view such as roof of a driver's cabin of a mobile object, e.g. an automobile. The data processing preparation unit 2, the operation unit 4, and the display unit 5 are installed at such position as the driver's cabin where an operator or a driver can easily operate these units and can visually recognize. The operation unit 4 may be designed as a touch panel or the like and may be integrated together with the display unit 5.

Fig. 2 shows a case where the mobile object 9 is an automobile and the position detecting sensor 3 is disposed on a roof of the mobile object 9.

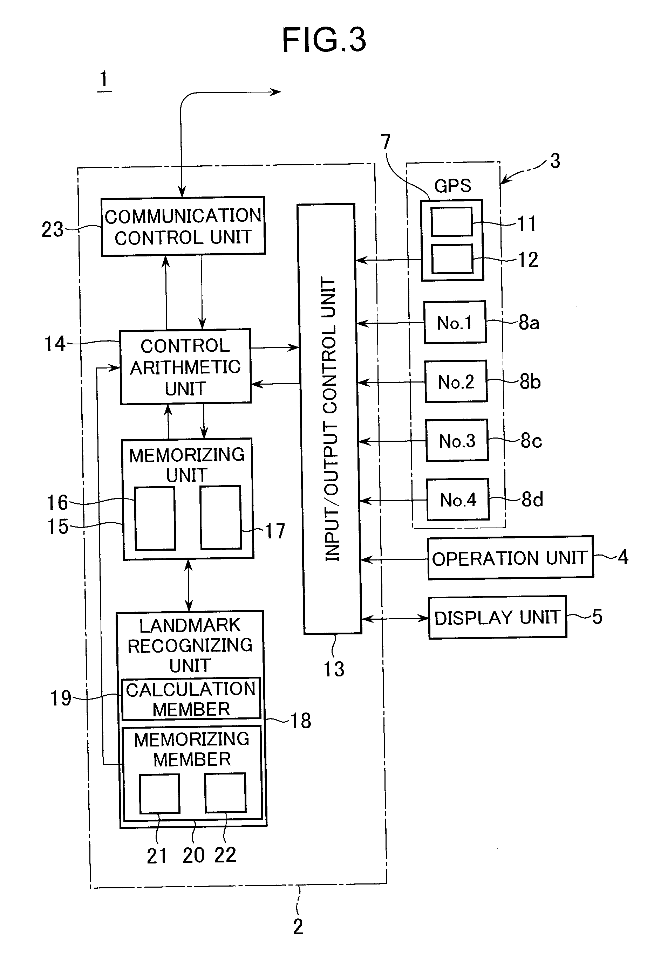

The position detecting sensor 3 comprises a GPS position detecting device 7 installed on an upper surface of a sensor main unit 6, and an image pickup unit 8a, an image pickup unit 8b, an image pickup unit 8c and an image pickup unit 8d, each being directed in each of four directions respectively and being disposed on side surface of the sensor main unit 6 (hereinafter, generally referred as "image pickup unit 8") (see Fig. 3).

The image pickup units 8 are disposed so that an image of scenery in total circumference can be taken. If each of the image pickup units 8 has a wide field angle, 3 image pickup units would suffice. In case each of the image pickup units 8 has a narrow field angle, 5 or more image pickup units must be installed. Also, it may be so arranged that one image pickup unit 8 is rotated in horizontal direction and an image is taken at every rotation angle.

Also, it may be so designed that two image pickup units 8 may be installed to take the image of scenery in two directions respectively, which cross perpendicularly with respect to an advancing direction of the mobile object 9. In this case, image pickup angle may be within an adequate range, and there is no need that the image pickup angle is 180°.

The image pickup unit 8 is a digital camera or a digital video camera or the like and can output the taken images as digital image data. The image pickup unit 8 has an image pickup element such as CCD sensor, CMOS sensor, which is comprised of a multiple of pixels. One frame of image data outputted from one image pickup unit 8 is constituted as an assembly of signals from each pixel. By identifying the pixel to match a signal, the position in the image can be identified.

The GPS position detecting device 7 has a GPS antenna 11 and a GPS calculation unit 12 (see Fig. 3). Signals from a plurality of satellites are received via the GPS antenna 11, and three-dimensional position measurement is performed by calculating three-dimensional geometrically a distance between the satellite and a receiving point by the GPS calculation unit 12 based on a result of the receiving. As position measurement, there are single position measurement and interference position measurement. It is preferable that RTK (real time kinematic) position measurement is adopted, by which measurement can be performed at high speed while moving.

The image pickup unit 8a, the image pickup unit 8b, the image pickup unit 8c and the image pickup unit 8d take images at predetermined time interval in synchronization. The acquired image data are sent to the data processing preparation unit 2. At the data processing preparation unit 2, the image data are associated with the moment when image is taken, and the data are stored in the image data storage region as to be described later. The image pickup interval may be determined to match the moving speed of the mobile object 9. For instance, in case the moving speed of the mobile object 9 is high, the time interval is made shorter, and if the moving speed is slow, the time interval is made longer.

Now, referring to Fig. 3, description will be given on the data processing preparation unit 2.

The data processing preparation unit 2 primarily comprises an input/output control unit 13, a control arithmetic unit 14 typically represented by CPU, a memorizing unit 15, a landmark recognizing unit 18, a communication control unit 23, etc.

The memorizing unit 15 is, for instance, memory card, HD, FD, MO, etc. It may be provided in incorporated manner or may be removably installed.

The memorizing unit 15 has a program storage region 16 and a data storage region 17. In the program storage region 16, various types of programs are stored. These programs include, for instance: a sequence program for controlling operation of the device, a surveying program for calculating three-dimensional data of feature point based on a position of the mobile object 9 by the method of intersection and for calculating the position of the mobile object based on three-dimensional data of feature point by the method of resection, a transmission control program for transmitting the obtained result of measurement to an external device such as data collecting device, a display program for displaying the result of position measurement on the display unit 5, and other programs.

Of the image data acquired by the image pickup units 8, images taken each at a predetermined interval are stored in the data storage region 17 as image data for measurement. Further, the moment when the image for measurement has been taken is associated with the image data for measurement. When three-dimensional coordinates can be acquired by the position detecting sensor 3, the image data for measurement is further associated with three-dimensional coordinates. Therefore, the image data for measurement and the three-dimensional coordinates are the data of time series.

The landmark recognizing unit 18 has a calculation member 19 and a memorizing member 20. The memorizing member 20 further has a template image storage region 21 and a program storage region 22.

The control arithmetic unit 14 may also be used as the calculation member 19. Also, it may be so designed that the memorizing unit 15 and the memorizing member 20 are designed as the same memorizing device, and the memorizing device may comprise the program storage region 16, the data storage region 17, the template image storage region 21, and the program storage region 22.

In the template image storage region 21, image data, each to match each type of landmarks (e.g. to match road sign, signal unit, telephone pole, manhole cover, etc.) are stored as template images. In the program storage region 22, a landmark identifying program is stored. The landmark identifying program identifies and extracts a landmark from the image for measurement through pattern recognition between the image for measurement acquired by the image pickup units 8 and the pattern images. In this case, the shape and the pattern of the landmark such as road sign are the same all over the country. The accuracy of pattern recognition when the landmark is turned to template image is high, and there is no need to re-set each time of the measurement or each time when the place is changed.

The communication control unit 23 controls transmitting and receiving of the data when the data are given and taken to and from an external data processing device, such as a personal computer.

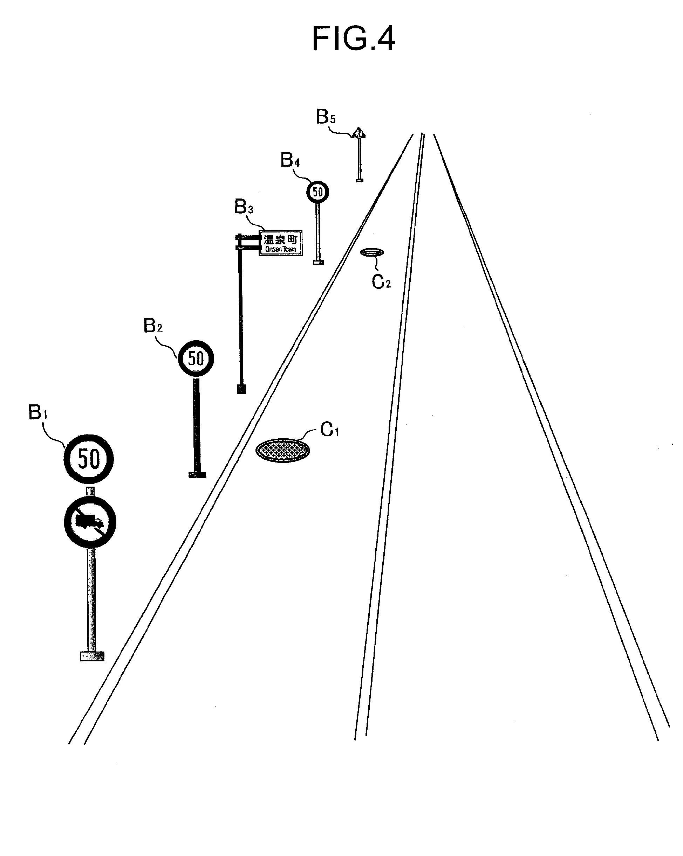

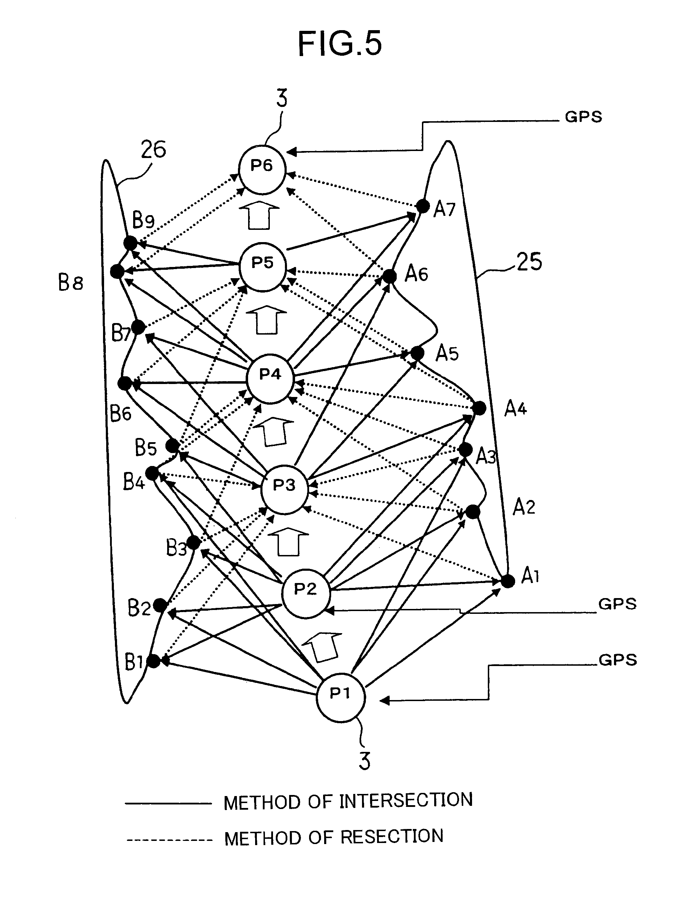

Now, referring to Fig. 4 and Fig. 5, description will be given on operation of the first embodiment of the present invention.

In the present embodiment, from continuous images, which have been taken when the mobile object is moving, landmarks are extracted, and a position of the mobile object 9 is determined from the position (three-dimensional data) of the landmark. In the first embodiment, description will be given on a case where three-dimensional data (hereinafter referred as "coordinate values") of the landmark are unknown.

Fig. 4 shows conditions where there is a road to be measured, and road signs B1, B2, B3, B4, B5, ...... are installed along the road as landmarks, and manhole covers C1, C2, ...... are installed on the road surface as the landmarks.

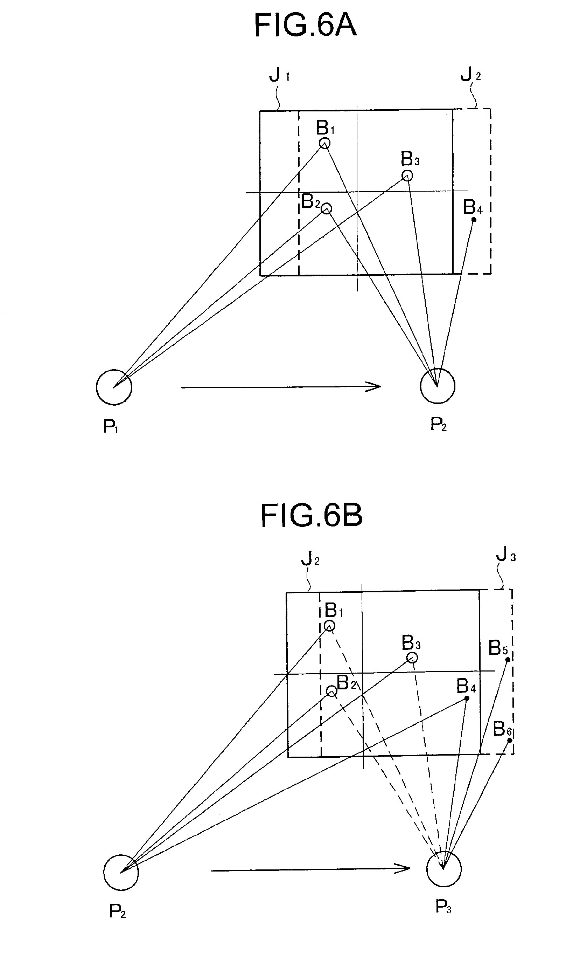

Fig. 5 is a schematical drawing to show a relation of obstacles (shapes of scenery) 25 and obstacles (shapes of scenery) 26 with the mobile object 9, i.e. a relation with the position detecting sensor 3. In Fig. 5, the symbols A1 to A7 represent landmarks on right side of the road in advancing direction respectively. In Fig. 5, the symbols B1 to B9 represent landmarks on left side of the road in advancing direction respectively. Fig. 6 (A) is a drawing to explain that a position of each measuring point is determined by the method of intersection, and Fig. 6 (B) is a drawing to explain that a position of each of image pickup points is determined by the method of resection based on the obtained images.

Fig. 5 shows a condition that the mobile object 9 advances between the obstacles 25 and the obstacles 26 and that the position detecting sensor 3 is moved from a first point (a measuring point P1) to a sixth point (a measuring point P6) (hereinafter, "the measuring point P" is simply referred as "P"). At P1 and P2, signals from satellites can be received via the GPS antenna 11. At the points P3 to P5, the signals from satellites cannot be received because the signals are interrupted by the obstacles 25 and the obstacles 26. At the point P6, the signal from the satellite can be received again.

On P1 and P2, it may be so arranged that, instead of position detection by GPS, position may be determined by the other measuring device, and these positions are regarded as "known points". Based on P1 and P2, which are now turned to the known points, the measurement and the preparation of the three-dimensional data may be started.

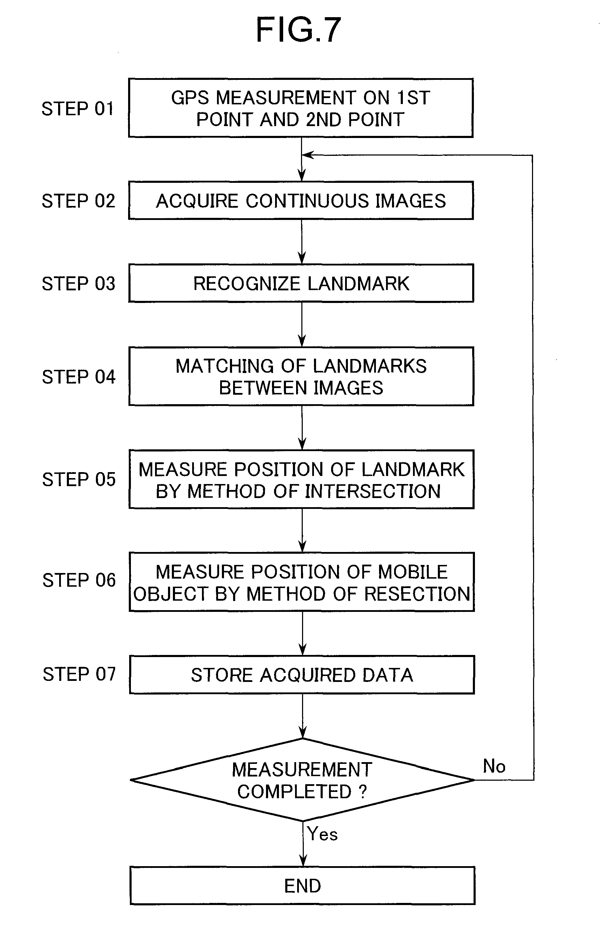

Referring to Fig. 7, description will be given below on the acquisition of image of the scenery on left side of the road and of the image of the landmarks and the position measurement based on the images.

At the time point when the mobile object 9 is at P1, the control arithmetic unit 14 acquires three-dimensional coordinates measured by the GPS position detecting device 7. At the same time, the control arithmetic unit 14 acquires the image data for measurement taken by the image pickup unit 8 (Step 01). The control arithmetic unit 14 uses an image J1 taken at P1 as a first image data for measurement, and associate the first image data for measurement with the measured three-dimensional coordinates of P1, and stores the associated image data in the data storage region 17.

During the time when the mobile object 9 is moving, images of the scenery in the surroundings are continuously taken by the image pickup units 8 (Step 02). Each of the points P indicates a position of the mobile object 9 taken at a predetermined time interval.

The control arithmetic unit 14 checks whether the position data is inputted or not from the GPS position detecting unit 7 for each of the points P. Depending on whether there is input or not from the GPS position detecting unit 7 at each of the points P, (as described after) it is judged and selected whether the position measurement of each of the points P is the measurement by the position detecting sensor 3 or whether it is the measurement based on calculation by the method of intersection and by the method of resection based on the image data for measurement. As a result, the measuring method as selected is carried out.

Based on the landmark identifying program stored in the program storage region 22, the landmark recognizing unit 18 recognizes the landmark from the data of the image for measurement according to pattern recognition on the image data for measurement by using a template image stored in the template image storage region 21 as template (Step 03). The landmark recognizing unit 18 calculates the center position of the landmark.

The center position of the landmark (landmark center point) is, the center of the figure, for instance, and the center of the figure can be identified by the position of the pixel of the image pickup element. The number of recognitions of the landmark is set to such a number as necessary for the measurement by the method of intersection.

For the recognition of the landmark, a method as disclosed in JP-A-8-255245 (the Patent Document 2) may be used, for instance.

In a process from P1 to P2, the sceneries in the surroundings are continuously taken by the image pickup units 8. The recognition of the landmarks based on the data of the image for measurement and on the template images is carried out at a predetermined time interval, and landmarks are tracked between images.

At P2, to which the position detecting sensor 3 has been moved, position measurement data from the position detecting sensor 3 is acquired, and the position measuring data and the second image data for measurement of an image J2 as taken at P2 are stored in the data storage region 17.

On the second image data for measurement, too, the recognizing of the landmark is carried out by pattern recognition using the template image, and azimuth of the center point of the landmark is obtained. Further, based on the result of the tracking operation, the landmark recognized as the first image data for measurement is matched with the landmark recognized by the second image data for measurement (Step 04).

The center points of the landmarks are thus recognized, and relative orientation of the image J1 and the image J2 is performed by regarding the center points of the landmarks as pass points (B1, B2, B3, ......), and the image J1 and the image J2 are considered as images including three-dimensional data (i.e. stereoscopic images). By using the three-dimensional coordinates obtained by this stereoscopic image and by the method of intersection, three-dimensional coordinates of each of the landmark center points (B1, B2, B3, ......) are calculated (Step 05).

As the result of calculation, the center points (B1, B2, B3, ......) of the landmarks are now turned to known points. The three-dimensional coordinates of the center points (B1, B2, B3, ......) of the landmarks are associated with the first image data for measurement and with the second image data for measurement and are stored in the data storage region 17. Also, the image J1, the image J2 and an image taken at the measuring point P (to be described later) are stored in the data storage region 17 together with the three-dimensional data.

When the mobile object 9 moves to P3, the electric waves from satellites are interrupted by the obstacles 26, and position measurement by the position detecting sensor 3 is not inputted. When the control arithmetic unit 14 judges that there is no input from the position detecting sensor 3, the control arithmetic unit 14 is switched over to the position measurement by calculation based on the method of resection.

During the time period when the mobile object 9 reaches P3, the image pickup by the image pickup units 8, the recognizing of the landmarks during image pickup, and the tracking of the landmarks are continuously carried out.

Specifically, based on three-dimensional coordinates of the center points (B1, B2, B3, ......) of the landmarks already obtained, based on the center points (B1, B2, B3, ......) of the landmarks in the image J2 acquired at P2, and based on the images acquired at P3, three-dimensional coordinates of P3 is calculated by the method of resection (Step 06; See Fig. 6 (B)).

When the mobile object 9 moves to P1, P2, P3, ...... and the range of image pickup is moved, new landmarks are sequentially included in the taken images. By pattern recognizing based on template image, the new landmarks are recognized, and further, the center points of the landmarks can be measured.

For instance, when it is referred to Fig. 6 (A) and Fig. 6 (B), a landmark B4 is generated on the image J2, and landmarks of B5 and B6 are generated on the image J3. Tracking operation is performed on the newly generated landmarks. Further, three-dimensional coordinates of the landmarks are calculated and measured sequentially by the method of intersection on the landmarks thus generated.

By the method of resection, the point P3 is turned to a known point.

From the three-dimensional coordinates of the center points of the landmarks in the images, the position of Pn is calculated and determined by the method of resection. Further, from the three-dimensional coordinates of P(n-1) and Pn, which have been turned to known values, the positions of the center points of the newly generated landmarks can be calculated and determined by the method of intersection based on the images. Even when the electric waves from satellites cannot be received and the position of the point P cannot be determined by the position detecting sensor 3, the position of the point P (i.e. three-dimensional coordinates) can be continuously determined by carrying out alternately the method of intersection and the method of resection.

Next, when the mobile object 9 reaches the point P6, the electric waves from satellites can now be received. The position of P6 is determined by the position detecting sensor 3. When the three-dimensional coordinates measured by the position detecting sensor 3 are inputted to the control arithmetic unit 14, the control arithmetic unit 14 judges that the three-dimensional coordinates have been inputted, and calculation by the method of resection is stopped. The image data taken at P6 by the image pickup units 8, the center points of the landmarks extracted from the image data, and the three-dimensional data of the center points of the landmarks can be obtained through preparation of the stereoscopic image. The three-dimensional data thus obtained are associated with the three-dimensional coordinates of P6 and are stored in the data storage region 17.

Therefore, during the time period when the positional data are inputted from the position detecting sensor 3, the results measured at the position detecting sensor 3 are adopted as the data of position measurement at P. When the positional data from the position detecting sensor 3 is interrupted, the three-dimensional data obtained through the preparation of the stereoscopic image and the three-dimensional coordinates at P as calculated by the method of intersection and the method of resection are adopted, and the position of the point P can be continuously measured without interruption.

Also, it is supposed that for two adjacent image pickup points, e.g. P2 and P3, relative orientation is performed by using the center points of the landmarks on two images acquired at P2 and P3 as pass points, and that other image (at P3) turned to an image (stereoscopic image) including three-dimensional data, it is possible to determine positional data and azimuth data (i.e. three-dimensional coordinates) of each of pixels, which constitutes the other image, by the images, and this makes it possible to perform calculation at higher speed. The stereoscopic image of the point P obtained by relative orientation is stored in the data storage region 17 (Step 07).

The images taken at each of the measuring points can be regarded as images, which include three-dimensional data relating to the coordinates acquired from the GPS. Even when there is a portion in shade where electric waves from satellites are interrupted and do not reach during the measuring operation by a single GPS position detecting device 7, the position measurement is not interrupted, and continuous and large amount of three-dimensional data and image with three-dimensional data can be acquired.

In the description as given above, position measurement of the point P is performed by taking the images on left side of the mobile object 9, but when the landmarks cannot be obtained from the images on left side, for instance, the images on right side may be adopted. Depending on the circumstances, the images to be acquired can be selected adequately in a stage of image processing.

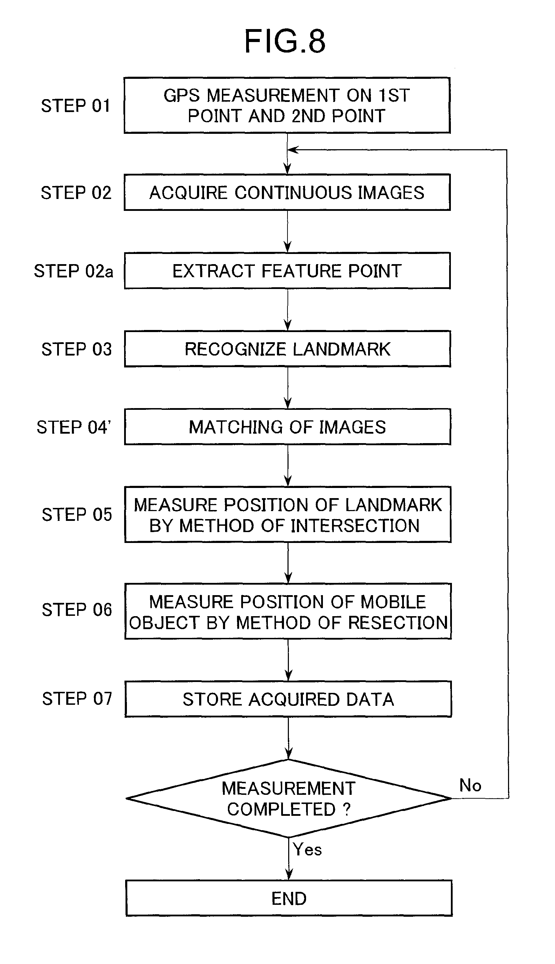

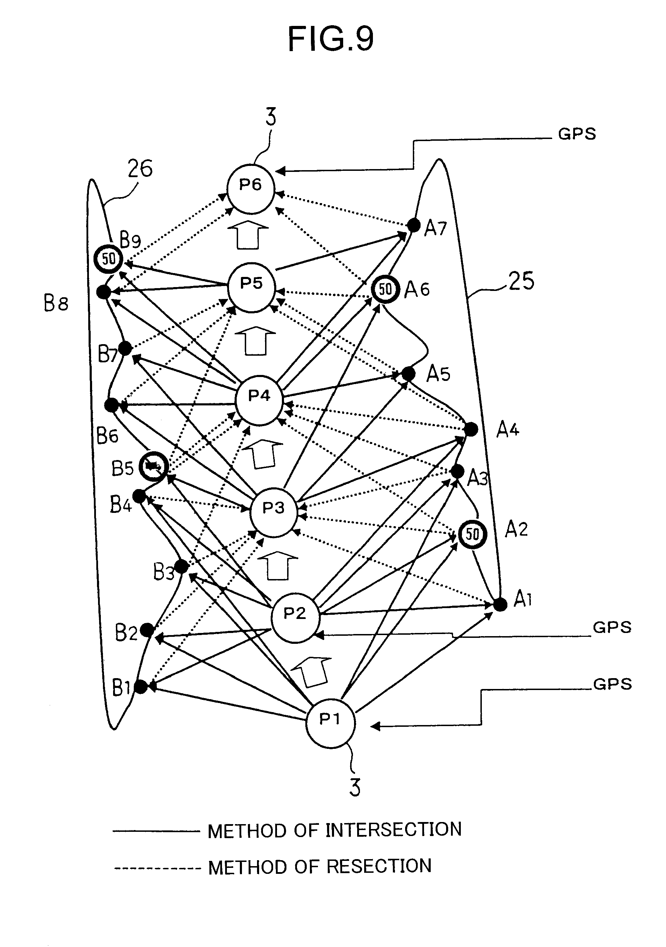

As shown in Fig. 8 and Fig. 9, in the tracking operation between the images for measurement, in addition to the landmarks, feature point obtained though the extraction of the feature point may be adopted.

Even when there is no landmark in the image, it is possible to extract the feature points (Step 02a) and to perform tracking operation of the image through the extraction of the feature points (Step 04'). Also, when three or more landmarks are present in a continuous series of images or at the time when three or more landmarks appear, the three-dimensional coordinates of the position detecting sensor 3 can be determined by the method of resection.

Next, description will be given on the second embodiment where the positions of the landmarks, i.e. three-dimensional coordinates of the landmarks, are already known.

As described in the first embodiment, if the coordinates of the two image pickup points are known at the start of the image pickup operation, the landmarks can be recognized from continuous images and the coordinates of the landmarks can be determined.

Therefore, when the coordinates of the first two points where images have been taken are measured by a measuring device other than the GPS position detecting device 7 (e.g. by a total station), the position detecting sensor 3 may not have the GPS position detecting device 7.

Further, in the process where the mobile object moves from P1 to P6 as shown in Fig. 5, coordinates of the road signs B1, B2, B3, B4, B5, ......, and road signs A1, A2, A3, A4, A5, ...... are determined, and three-dimensional coordinates of each of the road signs become known. Also, the manhole covers C1, C2, ...... used as landmarks have accurate three-dimensional coordinates as map data.

Accordingly, when the mobile object has already passed the roads where surveying has already been performed (hereinafter referred as "route already surveyed"), three-dimensional coordinates of the landmark in the images on the road side or three-dimensional coordinates of the landmarks including the images taken when the mobile object passes the road are already known. Therefore, on the second time and after, there is no need to obtain three-dimensional coordinates of the landmarks by the method of intersection.

In case the mobile object 9 moves along the route already surveyed at the second time or after, three-dimensional coordinates of the mobile object 9 can be determined by the method of resection based on the coordinates of the center points of the landmarks, which are already known.

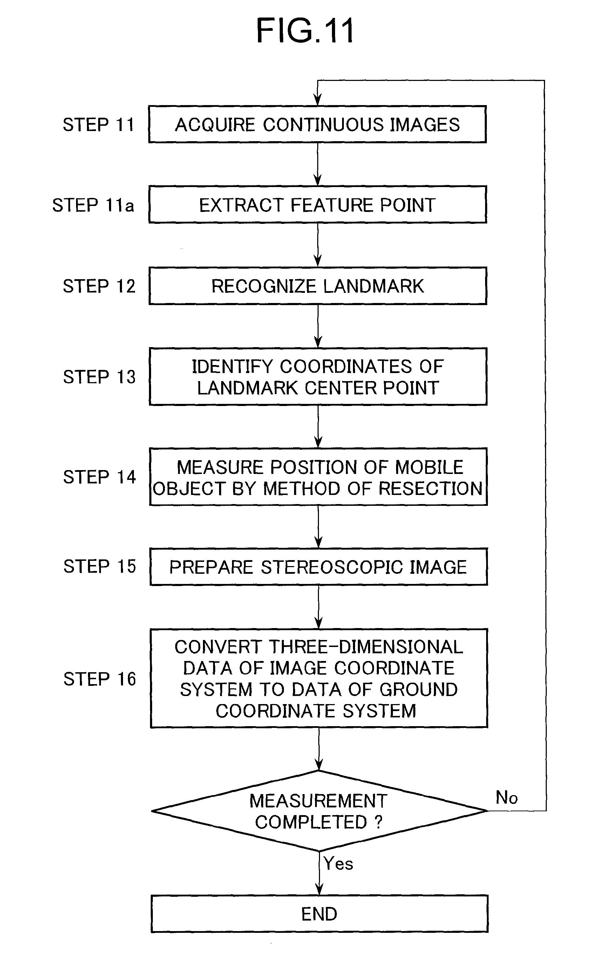

Now, referring to Fig. 3 and Fig. 11, description will be given on the second embodiment.

In the second embodiment, basic arrangement is the same as shown in Fig. 3. In the second embodiment, information of the landmarks already measured, i.e. images of the landmarks already measured, are associated with the three-dimensional coordinates by the landmark recognizing unit 18, and these are stored in the landmark recognizing unit 18.

In the second embodiment, there is no need to have three-dimensional coordinates of the mobile object 9 at the time of starting. Therefore, there is no need to determine the position of the image pickup point.

When the mobile object 9 is moved, the scenery in the surroundings are continuously taken, and continuous images are acquired (Step 11).

The recognizing of the landmarks is carried out at a predetermined time interval based on the image data for measurement and on the template image (Step 12). Further, the coordinate positions of the recognized landmarks are called in by the landmark recognizing unit 18, and coordinate position of the recognized landmark can be identified (Step 13).

Tracking operation of the landmarks is carried out between two images for measurement after elapse of a certain time period, and the landmarks are matched with each other. Based on the three-dimensional coordinates of the center points of a plurality of landmarks in the images for measurement as taken at the present moment, three-dimensional coordinates of the position detecting sensor 3 at the present moment are determined (Step 14).

The image taken at the present moment is associated with the three-dimensional coordinates of the position detecting sensor 3 at the present moment, and this associated image is stored in the data storage region 17.

For the tracking between the images for measurement as shown in Fig. 11, the feature points as obtained by the extraction of the feature points may be used in addition to the use of the landmarks (Step 11a). Even when there is no landmark in the image, the tracking of the image can be performed by extraction of the feature points. When there are three or more landmarks in a continuous series of images or when three or more landmarks appear, three-dimensional coordinates of the position detection sensor 3 can be determined by the method of resection.

From the coordinates of the center points of the landmarks obtained from the images for measurement as taken at a predetermined time interval and from azimuth to the coordinates of the center points, the three-dimensional coordinates of the position detecting sensor 3 at the present moment can be determined at real time, and image data for measurement at the present moment are associated with the three-dimensional coordinates and are stored. Image pickup of the image for measurement, the association of the data of the images for measurement with the three-dimensional coordinates, and storing of the images for measurement are repeated over a scheduled moving range of the mobile object 9 or over a predetermined moving range.

Similarly to the case of the first embodiment, relative orientation is performed by using the center points of the landmarks as pass points on two images for measurement as acquired at two adjacent image pickup points, and these images for measurement are regarded as images including three-dimensional data (i.e. stereoscopic image). The stereoscopic image at P as obtained by relative orientation is stored in the data storage region 17, and the stereoscopic image at each image pickup point is sequentially stored in the data storage region 17 (Step 15).

Further, based on absolute data of the ground coordinate system of the landmarks, three-dimensional data of each image are sequentially converted to the data of the ground coordinate system (Step 16).

Until the time when the mobile object 9 passes through the range of measurement, the processes of Steps 11 to 16 as described above are repeated, and image data with the three-dimensional data are prepared over total measurement range.

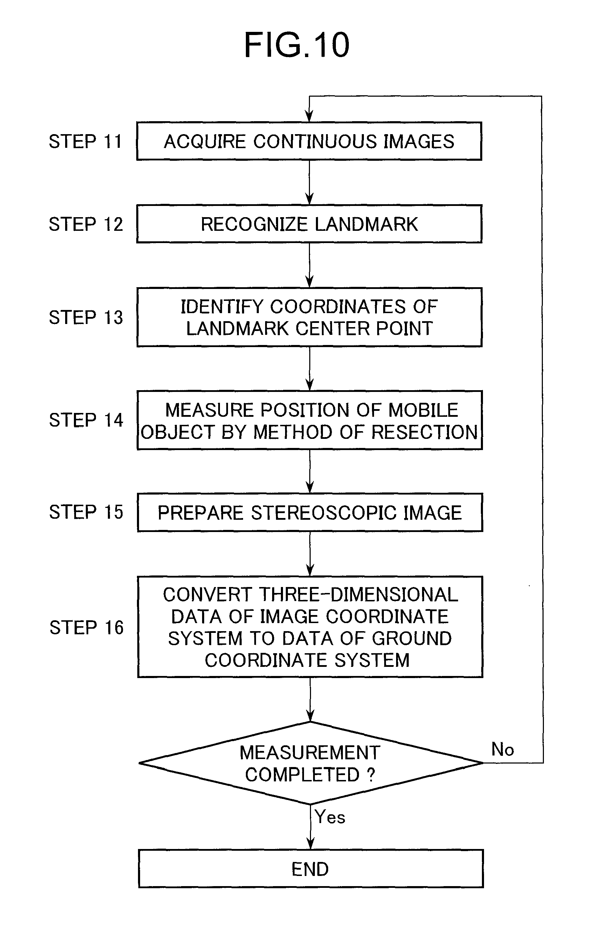

For the tracking operation between the images for measurement, feature points obtained through the extraction of the feature points may be used in addition to the use of the landmarks. Even when there is no landmark in the image, the tracking operation of the image can be performed through the extraction of the feature points. When three or more landmarks are present in a continuous series of images or when three or more landmarks appear, three-dimensional coordinates of the position detection sensor 3 can be determined by the method of resection (see Fig. 9 and Fig. 10).

To improve the accuracy of the three-dimensional coordinates of the center point of the landmark, it may be so designed that the measurement of three-dimensional coordinates of the center point of the landmark according to the first embodiment is repeated for a plurality of times, and the results may be averaged.

Also, on the route, which is to be surveyed, measurement may be made on the landmarks along the route by a surveying instrument in advance to acquire the three-dimensional coordinate data of the landmarks, and the three-dimensional data may be stored together with the template images in the template image storage region 21.

In this case, the GPS position detecting device 7 may not be used as the position detection sensor 3.

### INDUSTRIAL APPLICABILITY

The present invention provides a three-dimensional data preparing method, using an image pickup unit to take an image of scenery in the surroundings and to acquire digital image data, comprising a step of continuously taking images of scenery in the surroundings by the image pickup unit while moving, a step of acquiring the images taken at predetermined time interval as images for measurement, a step of extracting a landmark from the image for measurement through pattern recognition by using the landmark as a template, a step of carrying out a matching of two adjacent images for measurement as time passes, and a step of obtaining three-dimensional coordinates of a point to take the image for measurement based on three-dimensional coordinates of a landmark of the image for measurement where three-dimensional coordinates of the landmark included at least in the first one image for measurement is already known. As a result, three-dimensional coordinates of an image pickup point can be determined by simply acquiring three-dimensional coordinates of a certain predetermined landmark at first.

The present invention provides a three-dimensional data preparing method, using a position detecting sensor at least having an image pickup unit to take an image of scenery in the surroundings and to acquire digital image data, comprising a step of continuously taking the images of scenery in the surroundings by the image pickup unit while moving, a step of acquiring the images taken at a predetermined time interval as images for measurement, a step of extracting a landmark from the image for measurement through pattern recognition by using the landmark as a template, a step of carrying out a matching of two adjacent images of measurement as time passes, a step of obtaining three-dimensional coordinates of the landmark based on the three-dimensional coordinates of the two points, which three-dimensional coordinates of two points where at least the first two images for measurement are taken are already known, and a step of obtaining three-dimensional coordinates of the next point to take images for the next measurement based on the three-dimensional coordinates of the obtained landmark. As a result, there is no need to extract the feature point by image processing as in the past and data processing amount is reduced. Because shape and image pattern are simple and are already known, the accuracy of the landmark recognizing is high, and the accuracy of measurement of the coordinates is improved.

The present invention provides a three-dimensional data preparing method, wherein the matching of the two images is carried out by using the landmarks and feature points in the images. As a result, even in case there is no landmark or in case there is no sufficient number of landmarks, three-dimensional data can be prepared without interruption.

Also, the present invention provides the three-dimensional data preparing method as described above, further comprising a step of measuring three-dimensional coordinates of the two points by a surveying instrument, wherein three-dimensional coordinates of the two points are acquired by the surveying instrument. As a result, there is no need to use the GPS position detecting device, and it is possible to perform measurement in any arbitrary area regardless of whether there is an obstacle or not.

The present invention provides a three-dimensional data preparing device, comprising an image pickup unit for taking images of scenery in the surroundings and for acquiring a digital image, a recognizing unit, having a landmark image as a template, for using the digital images acquired at a predetermined time interval as the images for measurement, and for recognizing the landmark from the image for measurement through pattern recognition of the image for measurement with the template, and a data processing preparation unit, having in advance three-dimensional coordinates of the landmark included in the image for measurement thus taken, for measuring the three-dimensional coordinates of an image pickup point by the method of resection based on the three-dimensional coordinates of the recognized landmark. As a result, there is no need to use a measuring device to measure three-dimensional coordinates of the image pickup point. Also, there is no need to extract the feature point by image processing and the data processing amount is reduced. Because the shape and the image pattern are simple and are already known, the accuracy of the landmark recognizing is high, and the accuracy of measurement of the coordinates is improved.

Also, the present invention provides the three-dimensional data preparing device as described above, wherein the data processing preparation device has in advance at least three-dimensional coordinates of the landmark to be needed for the method of resection, among the landmarks present in a predetermined moving range, and measures three-dimensional coordinates of the image pickup point in the moving range by the method of resection. As a result, there is no need to use the measuring device to measure image pickup position, and it is possible to measure three-dimensional coordinates of image pickup position with high accuracy regardless of whether there is an obstacle or not.

Further, the present invention provides the three-dimensional data preparing device as described above, comprising a position detecting sensor at least provided with an image pickup unit for taking an image of scenery in the surroundings and for acquiring a digital image, a recognizing unit, having landmark image as a template, for having the digital images acquired at a predetermined time interval as images for measurement and for recognizing landmark from the image for measurement through pattern recognition of the image for measurement with the landmark, and a data processing preparation unit for performing stereoscopic measurement by matching of landmarks in two adjacent images for measurement as time passes, for obtaining three-dimensional coordinates of the landmark by the method of intersection based on the three-dimensional coordinates of a first and a second points wherein the first and the second points are points taking at least first two images for measurement and three-dimensional coordinates of the first and the second points are already known, for measuring three-dimensional coordinates of a third point by the method of resection based on the three-dimensional coordinates of the obtained landmark and on the a result of stereoscopic measurement of the third point, which is an unknown point, and for associating three-dimensional coordinates of each of image pickup points with the images for measurement as obtained at each of the image pickup points. As a result, there is no need to extract feature point by image processing as in the past and the data processing amount is reduced. Because the shape and the image pattern are simple and are already known, the accuracy of the landmark recognizing is high, and the accuracy of measurement to measure the coordinates is improved.

## Claims

1. A three-dimensional data preparing method, using an image pickup unit to take an image of scenery in the surroundings and to acquire digital image data, comprising a step of continuously taking images of scenery in the surroundings by said image pickup unit while moving, a step of acquiring the images taken at predetermined time interval as images for measurement, a step of extracting a landmark from the image for measurement through pattern recognition by using the landmark as a template, a step of carrying out a matching of two adjacent images for measurement as time passes, and a step of obtaining three-dimensional coordinates of a point to take the image for measurement based on three-dimensional coordinates of a landmark of the image for measurement where three-dimensional coordinates of the landmark included at least in the first one image for measurement is already known.

2. A three-dimensional data preparing method according to claim 1, wherein matching of said two images is carried out by using landmarks.

3. A three-dimensional data preparing method according to claim 1, further comprising a step of extracting a feature point, wherein matching of said two images is carried out by using the landmarks and the feature point.

4. A three-dimensional data preparing method according to claim 1, including a step of obtaining three-dimensional coordinates of a landmark in the measurement image taken from two points to take images for measurement by the method of intersection.

5. A three-dimensional data preparing method according to claim 1, comprising a step of measuring three-dimensional coordinates of the landmark included in said image for measurement by means of a surveying instrument.

6. A three-dimensional data preparing method according to claim 1, further comprising a step of measuring three-dimensional coordinates by a surveying instrument in advance with respect to a landmark needed for measurement by the method of resection among the landmarks included in the image taken in a predetermined moving range.

7. A three-dimensional data preparing method, wherein three-dimensional coordinates are measured by the three-dimensional data preparing method according to claim 4 with respect to a landmark needed for the measurement by the method of resection among the landmarks included in the image taken in a predetermined moving range.

8. A three-dimensional data preparing method, using a position detecting sensor at least having an image pickup unit to take an image of scenery in the surroundings and to acquire digital image data, comprising a step of continuously taking the images of scenery in the surroundings by said image pickup unit while moving, a step of acquiring the images taken at a predetermined time interval as images for measurement, a step of extracting a landmark from the image for measurement through pattern recognition by using the landmark as a template, a step of carrying out a matching of two adjacent images of measurement as time passes, a step of obtaining three-dimensional coordinates of said landmark based on the three-dimensional coordinates of said two points, which three-dimensional coordinates of two points where at least the first two images for measurement are taken are already known, and a step of obtaining three-dimensional coordinates of the next point to take images for the next measurement based on the three-dimensional coordinates of said obtained landmark.

9. A three-dimensional data preparing method according to claim 8, wherein matching of said two images is carried out by using landmarks.

10. A three-dimensional data preparing method according to claim 8, wherein the matching of said two images is carried out by using the landmarks and feature points in the images.

11. A three-dimensional data preparing method according to claim 8, wherein said position detecting sensor has a GPS position detecting device, and three-dimensional coordinates of said two points are made known by said GPS position detecting device.

12. A three-dimensional data preparing method according to claim 8, further comprising a step of measuring three-dimensional coordinates of said two points by a surveying instrument, wherein three-dimensional coordinates of said two points are acquired by said surveying instrument.

13. A three-dimensional data preparing device, comprising an image pickup unit for taking images of scenery in the surroundings and for acquiring a digital image, a recognizing unit, having a landmark image as a template, for using the digital images acquired at a predetermined time interval as the images for measurement, and for recognizing the landmark from said image for measurement through pattern recognition of said image for measurement with said template, and a data processing preparation unit, having in advance three-dimensional coordinates of the landmark included in the image for measurement thus taken, for measuring the three-dimensional coordinates of an image pickup point by the method of resection based on said three-dimensional coordinates of said recognized landmark.

14. A three-dimensional data preparing device according to claim 13, wherein said data processing preparation device measures three-dimensional coordinates of a first image pickup point and a second image pickup point by the method of resection and measures three-dimensional coordinates of an unknown landmark, with respect to unknown landmark in the image for measurement taken at the second point, by the method of intersection based on the matching of images from the first image pickup point and the second image pickup point.

15. A three-dimensional data preparing device according to claim 13, wherein said data processing preparation device has in advance at least three-dimensional coordinates of the landmark to be needed for the method of resection, among the landmarks present in a predetermined moving range, and measures three-dimensional coordinates of the image pickup point in said moving range by the method of resection.

16. A three-dimensional data preparing device according to claim 15, wherein three-dimensional coordinates of the landmark are determined by the three-dimensional data preparing method of claim 4.

17. A three-dimensional data preparing device according to claim 15, wherein three-dimensional coordinates of the landmark are measured in advance by the surveying instrument.

18. A three-dimensional data preparing device, comprising a position detecting sensor at least provided with an image pickup unit for taking an image of scenery in the surroundings and for acquiring a digital image, a recognizing unit, having landmark image as a template, for having the digital images acquired at a predetermined time interval as images for measurement and for recognizing landmark from said image for measurement through pattern recognition of said image for measurement with said landmark, and a data processing preparation unit for performing stereoscopic measurement by matching of landmarks in two adjacent images for measurement as time passes, for obtaining three-dimensional coordinates of said landmark by the method of intersection based on the three-dimensional coordinates of a first and a second points wherein said first and said second points are points taking at least first two images for measurement and three-dimensional coordinates of said first and said second points are already known, for measuring three-dimensional coordinates of a third point by the method of resection based on the three-dimensional coordinates of said obtained landmark and on the a result of stereoscopic measurement of the third point, which is an unknown point, and for associating three-dimensional coordinates of each of image pickup points with the images for measurement as obtained at each of the image pickup points.

19. A three-dimensional data preparing device according to claim 18, further comprising a GPS position detecting device, wherein three-dimensional coordinates of a first and a second points are acquired by said GPS position detecting device.

20. A three-dimensional data preparing device according to claim 18, wherein three-dimensional coordinates of said first and said second points are acquired in advance by a predetermined means.
